(19) Europäisches Patentamt
European Patent Office
Office européen des brevets

(11) **EP 4 409 229 B1**

(12) **EUROPEAN PATENT SPECIFICATION**

(45) Date of publication and mention
of the grant of the patent:
**15.07.2026   Bulletin 2026/29**

(21) Application number: **22782949.6**

(22) Date of filing: **28.09.2022**

(51) International Patent Classification (IPC):
***G01B 17/02*** *(2006.01)*       ***G01N 29/30*** *(2006.01)*
***G01N 29/07*** *(2006.01)*       ***G01N 29/22*** *(2006.01)*
***G01N 29/32*** *(2006.01)*

(52) Cooperative Patent Classification (CPC):
**G01B 17/02; G01N 29/07; G01N 29/221;**
**G01N 29/30; G01N 29/32;** G01N 2291/02854

(86) International application number:
**PCT/GB2022/052448**

(87) International publication number:
**WO 2023/052757 (06.04.2023 Gazette 2023/14)**

(54) **METHOD AND APPARATUS FOR ULTRASOUND INSPECTION OF AN OBJECT**

VERFAHREN UND VORRICHTUNG ZUR ULTRASCHALLINSPEKTION EINES OBJEKTS

PROCÉDÉ ET APPAREIL D'INSPECTION ULTRASONORE D'UN OBJET

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority:   **29.09.2021   EP 21275136**

(43) Date of publication of application:
**07.08.2024   Bulletin 2024/32**

(73) Proprietor: **Renishaw PLC
Wotton-under-Edge, Gloucestershire GL12 8JR
(GB)**

(72) Inventors:
• **WILSON, David John**
  **Edinburgh Lothian EH14 4AP (GB)**
• **HAND, Rory Neil**
  **Edinburgh Lothian EH14 4AP (GB)**
• **DING, Yining**
  **Edinburgh Lothian Eh14 4AP (GB)**

(74) Representative: **Rolfe, Edward William et al
Patent Department
Renishaw plc
New Mills
Wotton-under-Edge
Gloucestershire GL12 8JR (GB)**

(56) References cited:
**EP-A1- 3 702 726**

• WANG YONGQING ET AL: "Incident Angle
Identification Based on First-Echo Energy
Attenuation in Ultrasonic Thickness
Measurement", IEEE TRANSACTIONS ON
ULTRASONICS, FERROELECTRICS, AND
FREQUENCY CONTROL, IEEE, USA, vol. 65, no.
11, 1 November 2018 (2018-11-01), pages 2141 -
2149, XP011698404, ISSN: 0885-3010, [retrieved
on 20181107], DOI: 10.1109/TUFFC.2018.2867429

**Description**

The present invention relates to methods for inspecting a part and associated apparatus, in particular those involving ultrasound inspection devices which acquire ultrasound measurements of an object.

It is known to measure the quality and/or dimensions of manufactured objects to ensure they conform to quality requirements/tolerance. **In** the case of high value components, such as aerospace turbine blades, the external form of an object can be measured to sub-micron accuracy using a surface contact probe mounted on a coordinate measuring machine (CMM). Examples of techniques for measuring the positions of multiple points on the surface of an object using a CMM equipped with a surface contact (e.g. scanning) probe are described in US5189806 and WO2009/024783.

In addition to surface measurements, it is often necessary to measure the internal features/structure of an object and/or identify internal faults. For example, turbine blades are typically hollow to enable them to be both light-weight and strong for operation at extreme temperatures and pressures. The internal inspection of such hollow turbine blades is typically carried out using ultrasound inspection device, for example ultrasound immersion systems or an ultrasound thickness gauging probe. Such ultrasound inspection devices emit an ultrasound pulse, which is projected into the object being inspected, and echoes of the pulse are recorded by the ultrasound inspection device. The time delay between echoes of the pulse can provide valuable information about the object. Such systems can be referred to as a pulse-echo ultrasound inspection device.

Ultrasonic immersion systems generally involve submerging the test piece entirely within a water bath. A single pulse-echo transducer, or a pair of transmit/receive transducers, are appropriately positioned relative to the part using a computer controlled robotic arm. The water provides good acoustic coupling with the part but the arrangement is expensive and complex, especially for larger parts. An example of an ultrasonic immersion system is described in GB2440959.

Ultrasound probes do not require the part to be immersed in water but instead typically rely on the localised application of a couplant material (e.g. a coupling gel or liquid) to the part. Such probes tend to be handheld, but it has been described previously how such probes may be mounted to the quill of a CMM. For example, US2009/0178482 describes an ultrasound probe mounted to the quill of a CMM. The ultrasound probe of US2009/0178482 includes a gimbal mount that allows the sensor to align with the surface normal of the object when contact with the object is established. As explained in paragraph 19 of US2009/0178482 a couplant material, such as a gel or grease, must be applied to the relevant areas of the object prior to inspection to ensure adequate acoustic coupling between the ultrasound probe and the object. Handheld ultrasound probes that use a dry-couplant layer are also known.

WO2016/051147 describes various configurations of ultrasound probes for mounting on a positioning apparatus such as a CMM. In particular, WO2016/051147 describes ultrasound probes comprising a deformable coupling element (in contrast to ultrasound probes having a hard/rigid coupling element). The deformable coupling element can provide both ultrasound coupling to the part and also act as a delay line. WO2016/051147 also describes that the coupling element can comprise a self-lubricating material which preferably releases a lubricant, such as water and/or oil, from its external surface in a controlled manner. The self-lubricating material may comprise an oleophilic (silicone) elastomer, optionally a hydrophilic elastomer.

WO2020/174214 describes a method of calibrating an ultrasound probe to determine its axis of optimum signal (i.e. its "ultrasound axis") such that it can be determined how to subsequently orient the probe to achieve a desired signal during part inspection.

Wang Yongqing Et Al: "Incident Angle Identification Based on First-Echo Energy Attenuation in Ultrasound Thickness Measurement", IEEE TRANSACTIONS ON ULTRASONICS, FERROELECTRICS, AND FREQUENCY CONTROL, IEEE, USA, vol. 65, no. 11, 1 November 2018, pages 2141-2149, describes that the in ultrasonic pulse technology, the ultrasound transducer is required to be perpendicular to the test sample surface when using the longitudinal wave but that the transducer posture deviation (i.e. incident angle) of ultrasonic beam relative to the local surface normal is always inevitable, resulting in an incident angle induced thickness error. This paper focuses on the incident identification based on first-echo energy attenuation.

Typically, ultrasound inspection devices employ one of three well-known modes of operation from which time delay information can be extracted from an ultrasound signal measured. These different modes are typically termed Mode-1, Mode-2 and Mode-3 respectively. In Mode-1, the time delay measurement is made between the initial excitation pulse and the first echo/reflection from an internal feature or back-wall feature of the object (collectively referred to as an "interface echo"). In Mode-2 gauging, the time delay measurement is made between an echo/reflection from the front-wall feature and the first interface echo from an internal or back-wall feature. In Mode-3 gauging, the time delay measurement is made between two or more successive interfaces echoes from an internal or back-wall feature.

As described in more detail below, the present invention relates to an improved technique for determining the time delay between echoes of an ultrasound probe emitted into a part, in particular for non-parallel parts, and/or for instances where the ultrasound inspection device is oriented relative to part in a way such that the ultrasound inspection device's ultrasound axis is arranged non-parallel to the nominal surface normal of the front-wall feature of the part at the point of inspection.

According to a first aspect of the invention, there is provided a method of determining the time delay between echoes of an ultrasound pulse emitted by an ultrasound inspection device into an object, wherein the ultrasound inspection device and object are provided on a positioning apparatus having at least one axis about which the relative orientation of the ultrasound inspection device's ultrasound axis and object can be changed, and wherein one or more sensors are provided on the positioning apparatus for monitoring the relative arrangement of the ultrasound inspection device and the object, the method comprising: i) with the ultrasound probe in engagement with a front-wall feature of the object such that the ultrasound inspection device's ultrasound axis is arranged at a known angle relative to the nominal surface normal of the front-wall feature, taking an ultrasound measurement which comprises the ultrasound inspection device emitting an ultrasound pulse and recording echoes thereof, wherein the angle is known from the one or more sensors that are provided on the positioning apparatus for monitoring the relative arrangement of the ultrasound inspection device and the object; and ii) determining the time delay between echoes of the pulse via a time delay determination process which adjusts the time delay calculation based on the known angle of the ultrasound inspection device's ultrasound axis with respect to the nominal surface normal of the front-wall feature. Accordingly, in other words, the time delay determination process can take as an input, a variable relating the angle of the ultrasound inspection device's ultrasound axis with respect to the nominal surface normal of the front-wall feature.

The inventors found that the accuracy and/or reliability of the time delay measurement, and measurements derived therefrom (such as the thickness of, material structure of (e.g. porosity or density of, crystal morphology and/or orientation of), or speed of sound within the object), could be significantly improved using the method of the invention. In particular, the inventors found that the method of the invention could be used to obtain consistent and reliable time delay measurements, regardless of the angle at which the ultrasound inspection device is orientated relate to the part.

The present invention can remove the need for the end-user/customer to perform specific calibrations for each desired angle of measurement. For example, the customer could merely calibrate for the speed of sound in the object, e.g. via a parallel calibration block having the same material as the object to be inspected. Accordingly, the present invention can provide a benefit of simplifying and shortening the calibration process for an end user.

The determined time delay could be found by finding/measuring the time between corresponding points on two echoes of the ultrasound pulse emitted by the ultrasound inspection device into the object. For example, the determined time delay could be found by finding/measuring the time between corresponding features (e.g. peaks) of the echoes. For example, the determined time delay could be found by finding/measuring the time between the peaks after the absolute maximum peaks (the "PAM" peak) of the echoes. Alternatively other methods for determining the time delay could be used. For example, correlation techniques could be used, for instance autocorrelation, or cross-correlation, from which a primary peak can be identified to establish the time delay.

The determined time delay could be the time delay between an echo from the front-wall feature of the object and an echo from the internal or back-wall feature of the object (collectively referred to hereinafter as an "interface echo") (i.e. Mode-2 measurement). The determined time delay could be the time delay between successive interface/backwall echoes (i.e. Mode-3 measurement).

Experiments indicate that when measurements are taken with the probe at an oblique incidence with respect to the front-wall surface normal there might be an error in the time delay measurement which is dependent on the thickness of the part. Accordingly, optionally the time delay determination process additionally takes as an input (i.e. in addition to an input variable relating to the angle of the ultrasound inspection device's ultrasound axis with respect to the nominal surface normal of the front-wall feature), a variable relating to the nominal thickness of the part (between the front-wall feature and the internal or back-wall feature) at the point of measurement. In other words, optionally the time delay determination process adjusts the time delay calculation based on a variable relating to the nominal thickness of the part (between the front-wall feature and the internal or back-wall feature) at the point of measurement. Optionally, the time delay determination process additionally takes as an input a variable relating to the nominal speed of sound in the part at the point of measurement. In other words, optionally the time delay determination process adjusts the time delay calculation based on a variable relating to the nominal speed of sound in the part at the point of measurement. Instead of the adjusting the time delay calculation based on a known nominal thickness and/or speed of sound, the time delay determination process could take as an input an unadjusted measure of the time delay between echoes of the pulse. In other words, preferably the time delay determination process takes as an input a measure of the time delay between echoes of the pulse which has not been adjusted based on the angle of the ultrasound inspection device's ultrasound axis with respect to the nominal surface normal of the front-wall feature. Accordingly, optionally the time delay determination process adjusts the time delay calculation based on an unadjusted measure of the time delay between echoes of the pulse. Optionally, the front-wall feature and the internal or back-wall feature are non-parallel. The present invention is particularly useful when analysing the part of an object having such non-parallel features because in such a case it is often desirable to orient the ultrasound probe such the relative angular orientation of the ultrasound axis and said part at the point the ultrasound measurement is taken, is chosen such that the ultrasound axis of the ultrasound pulse as it propagates through the part (e.g. which, as described in more detail below, could be the ultrasound axis of the "refracted ultrasound pulse") is substantially parallel to the nominal surface normal of the internal or back-wall feature at the point of measurement. In such a case, it will likely be necessary to orient the ultrasound probe such that its ultrasound axis is not parallel to the surface normal of the front-wall feature, thereby leading to the aforementioned problem which the method of the present invention solves.

The time delay determination process can comprise at least one compensation (or "correction") model for determining the extent of adjustment based on the angle of the ultrasound inspection device's ultrasound axis with respect to the nominal surface normal of the front-wall feature. The compensation model could comprise at least one matrix, at least one function, and/or at least one look-up table.

As mentioned above, the determined time delay can be used to determine one or more properties of the object. For example, the determined time delay could be used to determine at least one of the thickness of, material structure of (e.g. porosity or density of, crystal morphology and/or orientation of), or speed of sound within the object between the front-wall feature and the internal or back-wall feature, at the point of measurement.

The ultrasound inspection device could comprise a coupling element for engaging the surface of an object to be inspected. The coupling element could comprise a deformable coupling element. In other words, the coupling element can be a soft coupling element (as opposed to a rigid/hard coupling element). Accordingly, the method can comprise loading the coupling element onto the surface of the object such that the coupling element is deformed out of shape. For example, the coupling element can comprise an elastomer. For example, the coupling element can comprise a polymer, for example a superabsorbent polymer.

The coupling element can be wet, e.g. with lubricant. Any appropriate lubricant can be used. Advantageously, the coupling element can comprise a self-lubricating material. A self-lubricating material preferably releases a lubricant, such as water and/or oil, from its external surface in a controlled manner. The self-lubricating material may comprise an oleophilic elastomer. Advantageously, the self-lubricating material comprises a hydrophilic elastomer. For example, the hydrophilic elastomer may comprise an incompressible gelatinous hydrophilic elastomer material such as a lightly cross-linked hydrophilic vinyl elastomer or a super absorbent polymer hydrogel, for example Sodium polyacrylate. An example of a high water content hydrophilic polymer chain compounds is MMA:VP (i.e. a Copolymer of N-vinyl pyrrolidone and methyl methacylate). For this compound, the water content can vary from about 35% to 95% and excellent acoustic properties are exhibited although the tear strength decreases as the water content is increased. Conveniently, the contact element/self-lubricating material is provided as a sphere. A preferred embodiment of the coupling element comprises at least one hydrophilic elastomer sphere.

The ultrasound inspection device could be mounted on a coordinate positioning apparatus. The positioning apparatus may include a machine tool, a robot or an arm. The positioning apparatus may be a manually operated positioning apparatus, but preferably the positioning apparatus comprises one or more motors for automatic operation, e.g. under the control or one or more processing devices (e.g. a machine controller). In a preferred embodiment, the coordinate positioning apparatus comprises a coordinate measuring machine. The CMM may be a Cartesian (e.g. bridge type) CMM or a non-Cartesian (e.g. hexapod) CMM. The positioning apparatus could facilitate relative translational motion of the ultrasound inspection device and object in at least two linear degrees of freedom.

The ultrasound inspection device could be mounted on an articulated member which has at least one, and optionally two (preferably orthogonal) axes of rotation. The articulated member could be a continuously articulated member. Optionally, the articulated member comprises an indexed articulated member (e.g. the articulated member comprises a set number of discrete orientations at which the articulated member can be locked). The articulated member can comprise at least one motor for controlling the orientation of the ultrasound probe about the at least one axis.

The articulated member could be mounted on a member of the coordinate positioning apparatus which is moveable along said at least two linear degrees of freedom, and preferably is mounted on a member of the coordinate positioning apparatus which is moveable along three orthogonal degrees of freedom. In the case of a bridge-type CMM such a member is commonly referred to as the "quill" or "Z-column". Accordingly, the ultrasound inspection device could be mounted on what is commonly referred to in the field as a five-axis coordinate positioning apparatus. If desired, the object could additionally/alternatively be mounted so as itself to be linearly and/or rotatably moveable, e.g. it could be mounted on a rotary table.

In accordance with the claimed invention, the angle of the ultrasound inspection device's ultrasound axis with respect to the nominal surface normal of the front-wall feature is known/determined from one or more sources independent of (or in other words, "other than" or "separate to") the ultrasound signal sensed by the ultrasound inspection device. Accordingly, the angle of the ultrasound inspection device's ultrasound axis with respect to the nominal surface normal of the front-wall feature is known/determined from one or more sensors other than, or separate to, the ultrasound inspection device's ultrasound transducer for sensing the ultrasound signal. One or more position sensors can be provided on the positioning apparatus for monitoring the relative arrangement of the ultrasound inspection device and the object. Such position sensors could, for example, comprise one or more position encoder devices, which are configured to monitor the relative position and/or angle of the relatively moveable parts of the positioning apparatus (e.g. of the relative position of the aforementioned linear and/or rotary axes). The angle of the ultrasound inspection device's ultrasound axis with respect to the nominal surface normal of the front-wall feature can be determined from known and/or assumed information about the configuration of the object. The angle of the ultrasound inspection device's ultrasound axis with respect to the nominal surface normal of the front-wall feature can be known/determined/assumed from known information about the nominal configuration of the object, for instance from Computer Aided Design (CAD) information. Additionally/alternatively, (for example, if the part is an unknown part, e.g. if the actual or nominal surface normal of the front-wall feature is unknown), then such configuration information can be determined/confirmed from an inspection of the object. Accordingly, the method could comprise inspecting the part to determine the surface normal of the front-wall feature.

The ultrasound probe can comprise a body portion distal the coupling element. In other words, the ultrasound probe can comprise a body portion at a first end, and the coupling element at the second end. The ultrasound probe can be mounted to the positioning apparatus via the body portion. The ultrasound probe (for example the body portion) and the positioning apparatus (for example, the articulated member/rotary head) can comprise corresponding mounting features for enabling the ultrasound probe to be mounted to the positioning apparatus, in particular which enable the ultrasound probe to be automatically loaded and unloaded on and off the positioning apparatus. In other words, preferably, the ultrasound probe is auto-changeable on the positioning apparatus, e.g. to/from a rack located in the positioning apparatus' operating volume. The ultrasound probe (for example the body portion) and positioning apparatus can comprise complementary features of a repeatable mount, for example complementary features of a kinematic mount. At least one of the ultrasound probe and positioning apparatus can comprise at least one magnet for retaining the ultrasound probe on the positioning apparatus.

The ultrasound inspection device could itself include at least one processing device for analysing the ultrasound measurement signal received by the ultrasound transducer to determine the time delay. Alternatively, the ultrasound measurement signal could be analysed by an off-inspection device processing device (e.g. in an external interface or using an off-line computer).

As will be understood, references herein to "processing device"/ "processor" / "component for processing", and the like, are intended to include bespoke processing devices configured for the specific application (e.g. a field programmable gate array "FPGA") as well as a more generic processing devices which can be programmed (e.g. via software) in accordance with the needs of the application in which it is used. Accordingly, suitable processing devices include, for example, a CPU (Central Processor Unit), FPGA (Field Programmable Gate Array), or ASIC (Application Specific Integrated Circuit), or the like.

The ultrasound inspection device can comprise at least one transducer for emitting an ultrasound pulse. The ultrasound inspection device can comprise at least one transducer for sensing an ultrasound pulse. Optionally, the ultrasound probe comprises the at least one transducer for emitting an ultrasound pulse and the at least one transducer for sensing an ultrasound pulse. Optionally, the at least one transducer for emitting the ultrasound pulse is the same sensor that is used to sense the ultrasound pulse. In other words, the ultrasound inspection device can comprise a single transducer for emitting and detecting the ultrasound pulse. The transducer may comprise a piezoelectric element. Preferably, the transducer excites longitudinal sounds waves (L-waves). The ultrasound inspection device can comprise a single-channel inspection device. For example, the ultrasound inspection device could comprise just one active element/transducer performing pulse echo operation. Optionally, the ultrasound inspection device could comprise a phased array inspection device.

The ultrasound inspection device may excite and receive ultrasound in any known way. The ultrasound inspection device may operate at a high frequency. For example, the operating frequency may be greater than 5MHz, greater than 10MHz or more preferably greater than 15MHZ. In an example embodiment, the operating frequency is around 20MHz. Higher frequencies (e.g. such as those above 15MHZ) have been found to be particularly useful for probes with a deformable tip, and in particular have been found to provide higher resolution measurements. It has been found that at lower frequencies more noise can occur inside the deformable tip.

According to another aspect of the invention there is provided an apparatus comprising a positioning apparatus and an ultrasound inspection device for mounting thereon, configured such that the relative translational position, and the relative angular orientation about at least one axis, of the ultrasound probe and an object to be inspected can be manipulated, wherein one or more sensors are provided on the positioning apparatus for monitoring the relative translational position and relative angular orientation of the ultrasound inspection device and the object, and the apparatus further comprising a processing device configured to determine a time delay between echoes of an ultrasound pulse emitted by an ultrasound inspection device into the object, via any of the above described methods. Features described above in connection with the first aspect of the invention are equally applicable to this aspect of the invention.

Embodiments of the invention will now be described, by way of example only, with reference to the following drawings in which:

Figure 1 schematically illustrates the fundamental operating principles of an example ultrasound probe;

Figure 2 illustrates the principle of ultrasound thickness measurement;

Figure 3 illustrates an ultrasound probe mounted on a coordinate measuring machine (CMM);

Figure 4 illustrates the different mechanical parts of an ultrasound probe;

Figure 5 illustrates the different electrical modules of an ultrasound probe;

Figures 6a and 6b illustrates how the difference between assumed and calibrated L-wave axis of an ultrasound probe can affect the propagation of the L-wave in a part;

Figures 7a and 7b illustrates the effect of the angle of inclination and thickness of the part on the measured time delay between echoes;

Figure 8 illustrates the time-domain waveforms for a front-wall echo received by the ultrasound probe's receiver when the probe's ultrasound axis is arranged parallel to the surface normal of the front-wall feature of a calibration artefact;

Figure 9 illustrates the effect on the time-domain waveform of the front-wall echoes received by the ultrasound probe's receiver when the probe's ultrasound axis is arranged at an oblique angle to the surface normal of the front-wall feature;

Figure 10 illustrates an example wedge calibration artefact;

Figure 11 is a graph illustrating the error in a deltaT measurement (the time delay between echoes) as a function of the angle of incidence of the ultrasound probe's ultrasound axis and the measured deltaT; and

Figure 12 illustrates an example embodiment where successive back-wall echoes are used to determine the thickness of the part.

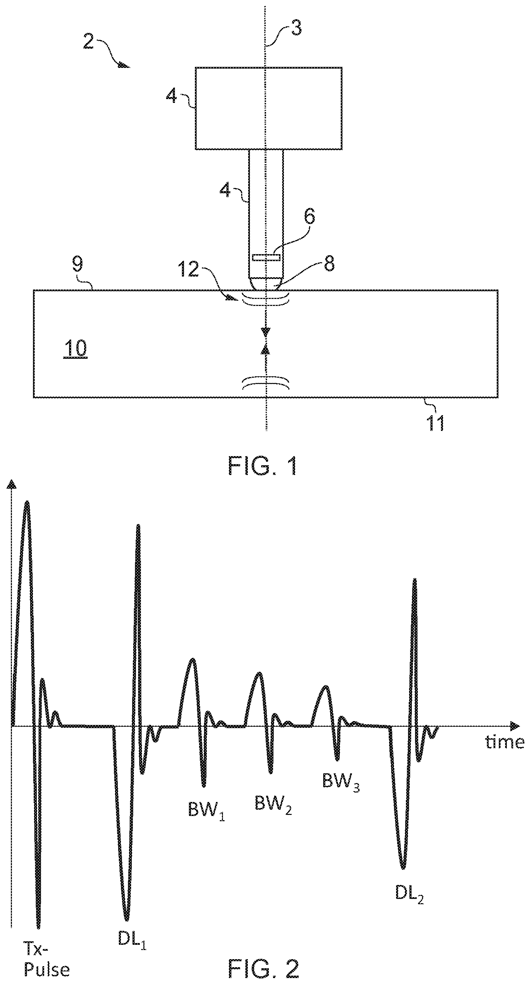

The fundamental operating principles of an example ultrasound inspection device will be explained with reference to Figures 1 and 2. Figure 1 shows an ultrasound probe 2 that comprises an outer body 4. An ultrasound wave/pulse transducer, e.g. a longitudinal wave ("L-wave") transducer, is provided that comprises a piezoelectric element 6 and a deformable coupling element 8. As will be understood, other commonly employed components within the ultrasound probe, such as the backing layer and matching layer (wave-plate), can form part of the ultrasound probe, but which for simplicity are not shown in Figure 1. To measure the thickness of an object 10, the probe 2 and/or object 10 are moved so as to engage the deformable coupling element 8 and the front-wall feature/surface 9 of the object 10. When an excitation pulse is applied across the piezoelectric element 6, an ultrasound pulse 12 is projected into the object 10. As schematically illustrated, this ultrasound pulse 12 is reflected by the back-wall feature 11 of the object (or any internal features between the front-wall 9 and back-wall 11 features), this reflected echo is sensed by the ultrasound probe (e.g. via the piezoelectric element 6). This process can be referred to as pulse-echo measurement, or more colloquially as "pinging". As will be understood, a thickness measurement estimation can be made using a time-of-flight or time-delay measurement of the projected ultrasound waveform.

Figure 2 is an example of the ultrasound signal/waveform received by the transducer's active piezoelectric element 6 in response to a transient high voltage excitation pulse being applied across the piezoelectric element 6. This time-domain waveform, referred to as an "A-scan" plot, can be a time averaged response from a train of such excitation pulses (e.g. a sequence of N pulses where N is at least 2, although a suitable range of values of N may be 16-32) in order to suppress random uncorrelated electronic noise.

The initial excitation pulse generated by the piezoelectric element 6 is labelled as the "Tx-Pulse" in Figure 2. This initial excitation pulse causes the inspection L-wave to propagate into the coupling element 8 (which acts as a delay line) and travel along at the speed of sound in the coupling element material ($C_L$). The first reflection/echo peak (DL1) received back at the piezoelectric element 6 arises from reflection of sound from the front-wall surface/feature 9 of the object 10. This reflection/echo from the front-wall surface/feature 9 of the object 10 (i.e. the DL1 echo) can be seen to occur at a time well after the initial transmit pulse (Tx-pulse) has completely receded.

Although some ultrasound is reflected back by the front-wall feature and never enters the object 10, a sufficient proportion of ultrasound does transmit into the object 10 as a measurable inspection pulse from which subsequent thickness measurements can be made. The speed of sound in the deformable coupling element 8 can be low compared to the speed of sound within the object 10, and so especially if the object is relatively thin, multiple interface reflections/echoes from the internal or back-wall feature 11 of the part 10 can occur before a second reflection peak/echo (DL2) from the delay line/coupling element 8 is registered at the transducer. These interface (e.g. internal/back-wall) reflections/echoes thus provide the pulses BW1, BW2, and BW3 that can also be seen in the "A-scan" plot of Figure 2. The time window observed within the A-scan between the first and second delay line reflection peak (DL1 and DL2) is thus the probe's "primary measurement window".

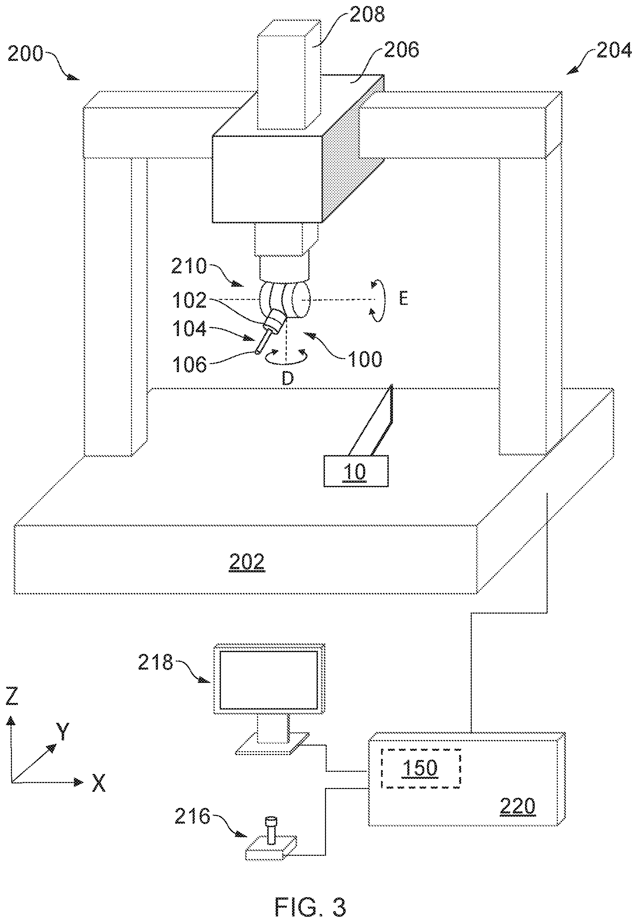

With reference to Figure 3 there is shown an ultrasound probe 100, like that described above in connection with Figures 1 and 2, mounted on a positioning apparatus 200. The positioning apparatus comprises a movement structure, in this case in the form of a coordinate measuring machine ("CMM"). The CMM 200 comprises a base 202, supporting a frame 204 which in turn holds a carriage 206 which in turn holds a quill 208 (or "Z-column"). Motors (not shown) are provided to move the quill 208 along the three mutually orthogonal axes X, Y and Z (e.g. by moving the frame along the Y axis, and the carriage 206 along the X axis, and the quill 208 along the Z-axis).

The quill 208 holds an articulated head 210, which could be an indexing head or a continuous head, but preferably is a continuous head (e.g. a REVO® head available from Renishaw plc). As will be understood, a continuous head enables orientation of a device mounted on it at substantially any angle about at least one axis and are often described as providing a near infinite number of angular orientations. Also, if desired, the orientation of the measurement device about an axis of a continuous head can be changed during measurement (e.g. whilst a contact probe is in contact with an object being inspected and acquiring measurement information). In contrast, an indexing head has a discrete number of defined ("indexed") positions at which the measurement device mounted on it can be locked. With an indexing head, the orientation of the measurement device can be changed, but not during the acquisition of measurement data.

In this embodiment, the articulated head 210 facilitates rotation of the probe 100 mounted on it, about first and second rotational axes D, E via appropriate bearings and motors (not shown).

The combination of the two rotational axes (D, E) provided by the articulated head 210 and the three linear (X, Y, Z) axes of translation of the CMM 200 allows the probe 100 to be moved/positioned in five degrees of freedom (two rotational degrees of freedom, and three linear degrees of freedom).

Further, although not shown, measurement encoders may be provided for measuring the relative positions of the base 202, frame 204, carriage 206, quill 208 and the parts of the articulated head 210 so that the position of the measurement probe 100 relative to a workpiece 10 located on the base 202 can be determined.

A controller 220 is provided for controlling the operation of the CMM 200, such as controlling the position and orientation of the ultrasound probe within the CMM volume (either manually, e.g. via an input device such as joystick 216, or automatically, e.g. under the control of an inspection program) and for receiving information (e.g. measurement information) from the CMM 200. A display device 218 can be provided for aiding user interaction with the controller 220. The controller 220 could, for example, be a dedicated electronic control system and/or may comprise a personal computer.

As shown, a probe interface 150 (for facilitating communication with the probe 100) can be provided in the controller 320, for example.

As will be understood, the present invention can be used with other types of positioning device, such as a robot arm, machine tool apparatus, and can even be used with manually held ultrasound inspection device, e.g. where the relative orientation of the ultrasound inspection device's ultrasound axis and object can be tracked, determined, and/or deduced.

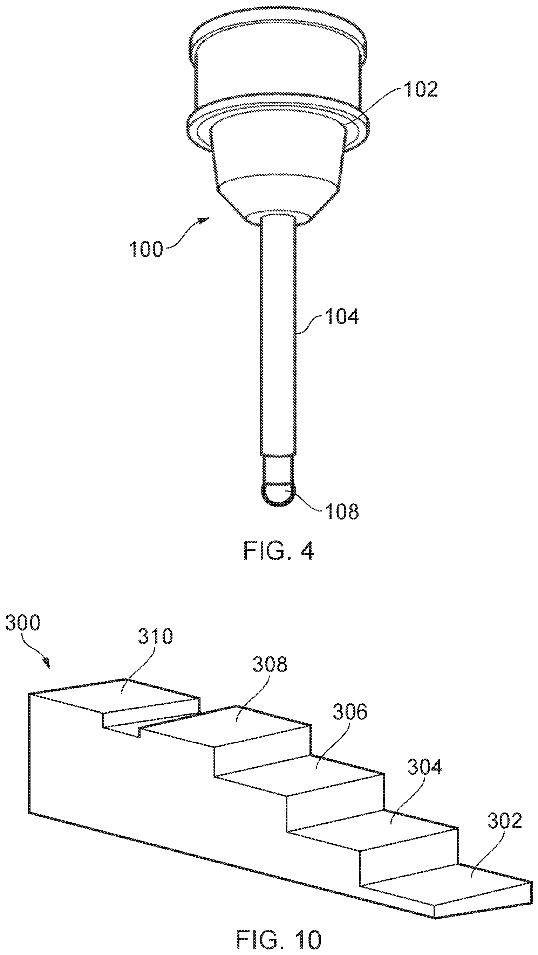

The present invention is suitable for use with a range of different types of ultrasound inspection device. WO2016/051147 and WO2016/051148 describe various types of ultrasound probe which the invention can be used with. For the sake of illustration, one particular type of ultrasound probe 100 will now be described in more detail in connection with Figure 4, which is configured to be mounted on a positioning apparatus, such as the CMM of Figure 3. The ultrasound probe 100 comprises a base module that includes a main body portion 102, which is provided at the proximal end of the probe 100 that attaches to the positioning apparatus/CMM. The main body 102 can contain electronics required to power the probe and communicate control data and activation commands to the probe (e.g. to schedule ultrasonic measurements). Power and/or control data, including ultrasonic data and thickness measurement results, may be passed through the rotary head communication channels and/or wirelessly. Rather than power being provided via the CMM, power could be provided by a battery located in the main body portion 102, for example.

An elongate tube 104 (e.g. a rigid carbon-fibre tube) extends from the main body 102, along the probe's axial length. A coupling element 108, in particular a deformable coupling element, is located at the end of the tube 104 distal the main body 102. In the embodiment described, the deformable coupling element 108 comprises a hydrophilic elastomer. Optionally, the deformable coupling element 108 is replaceable (e.g. could be attached via a screw or snap-fit). Optionally, and as is the case in the embodiment described, at least the portion of the coupling element 108 which protrudes from the tube 104 is spherical. As will be understood, the deformable coupling element may engage a wear plate of the transducer in the probe, and the deformable coupling element 108 may act as both the coupling element and a delay line. The deformable coupling element 108 can be soft and elastic so as to easily conform to the surface of the object 10 it engages.

In use, the ultrasound probe 100 is moved by the CMM 200 so as to bring the deformable coupling element 108 into contact with the front-wall feature 9 of the object 10 to be inspected, thereby forming an acoustic coupling with the object. The ultrasound probe 100 generates an ultrasound pulse/wave (for example, via a piezo-electric element) which is imparted into the object 10, and reflected by an internal feature or back-wall feature 11 of the object 10. The reflected ultrasound waves are sensed by the ultrasound probe, and analysed to determine the distance of the internal feature/back-wall feature 11 from the front-wall feature 9 of the object 10 (e.g. to determine the depth of the internal feature/thickness of the object 10).

The ultrasound inspection apparatus may excite and receive ultrasound in any known way. The ultrasound inspection apparatus may operate at a high frequency. For example, the operating frequency may be greater than 5MHz, greater than 10MHz or more preferably greater than 15MHZ. In a preferred embodiment, the operating frequency is around 20MHz. The transducer, which may comprise a piezoelectric element, preferably excites longitudinal sounds waves (L-waves).

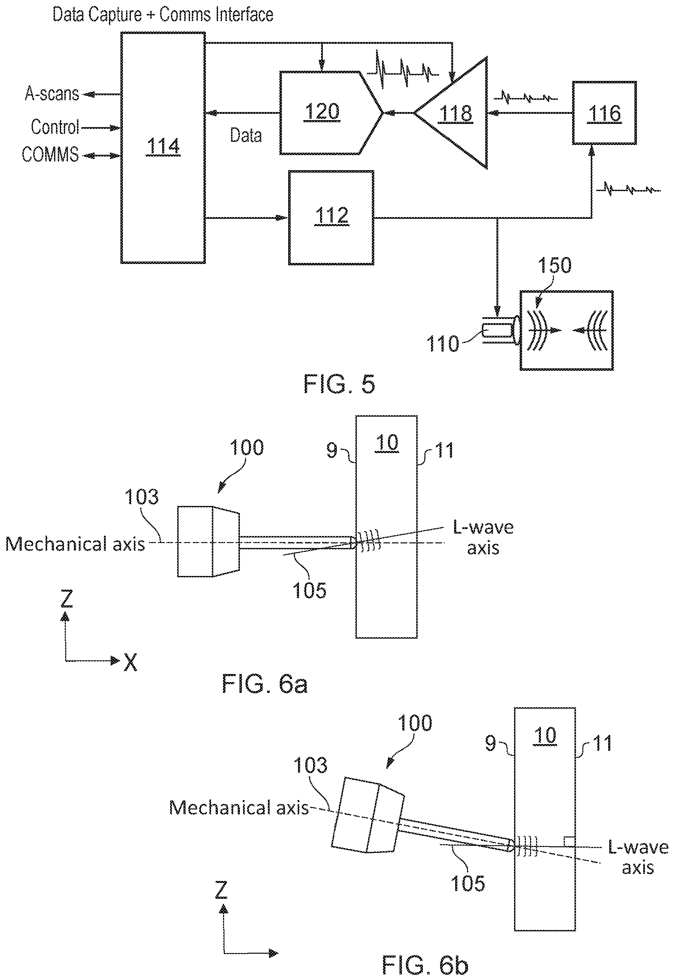

Figure 5 schematically illustrates an example embodiment of the analogue and digital electronic modules that can be provided with (e.g. within) the ultrasonic probe 100. As schematically shown, the ultrasound probe comprises an ultrasound transducer 110, for example a pulse-echo ultrasonic transducer that includes a piezo-electric element for transmitting high frequency time-discrete longitudinal waveforms (hereinafter termed "L-waves"), when driven by a train of high-voltage impulsive excitation pulses; e.g. negative going transition (NGT) pulses between 50-150V and of duration 1/2f.

An analogue "pulser" circuit 112 is provided that is capable of generating the repeated trains of high voltage (50-150V) a.c. analogue signals (e.g. NGT pulses). Although the pulser 112 is provided, a more sophisticated digital waveform synthesizer could alternatively be employed to generate frequency or amplitude modulated waveforms to drive the piezo in more attenuating environments. The high voltage pulses generated by the pulser 112 effectively drives the piezoelectric active element 110 within the transducer of the probe to output the required ultrasonic waveforms 150, but without exceeding the maximum voltage for such a thin fragile piezoelectric element. Each pulse activation may be instigated and precisely controlled in time by an enable signal sent to the "pulser" circuitry 112 from an FPGA 114 or equivalent processor. For every activation, a fast T/R switch 116 allows the device to instantaneously switch between the transmit mode and the longer duration receive mode during which time the system acquires and digitally records the acoustic response to the transmitted pulse measured by the reciprocal piezoelectric element 110.

It might be that the amplitude level of the received signals of interest can vary significantly. Accordingly, to try to deal with this a variable gain amplifier (VGA) 118 could optionally be provided to induce gain across the acquired A-scan response in order to amplify the signal prior to digital acquisition. Moreover, to equalise the variability within each A-scan response due to propagation loss or attenuation with some materials, a form of automatic gain control (AGC) known as distance-amplitude correction (DAC) may also be implemented. The amplified A-scan is then digitized using a suitably wide dynamic range (e.g. 12 bit) analogue-to-digital converter (ADC) 120 where sufficient over-sampling above the Nyquist rate is provided as the sample rate fundamentally effects the temporal resolution of the measurement system and thus the accuracy of the thickness measurement; e.g. a sampling rate of 125MHz or higher may be suitable for a 20MHz transducer. The encoded digital waveforms from the ADC 120 may also require band pass filtering using a digital filter, for example a low order FIR with a pass band matching the operating frequency of the transducer. The Tx-Rx electronics are designed so as to minimise all possible sources of electronic noise that may be observed within each individual A-scan. Such uncorrelated noise is most effectively suppressed by averaging across N successive repeated A-scan measurements (i.e. providing a theoretical $\sqrt{N}$ SNR gain). As will be understood, averaging is not necessarily conducted during the below described calibration method.

The ultrasound transducer 110 (e.g. a piezo-electric element) is preferably (although not necessarily) located toward the distal end of the tube 104 (i.e. at the end near the deformable contact element 108). The other electronics can be located anywhere within the probe, for example in the main body portion 102. Optionally, at least some of the other electronics could be located outside the probe, for example at least partially in the controller 220.

As will be understood, an ultrasound inspection device can have a mechanical axis 103 as well as an ultrasound axis 105. What the mechanical axis is will depend on the probe design. Typically, the mechanical axis of an ultrasound inspection device is defined with respect to the probe's coordinate system. In this embodiment, an ultrasound probe is mounted on an articulated head, and the probe's coordinate system rotates with the ultrasound probe as the ultrasound probe rotates about an axis of the articulated head. In the case of the ultrasound probe being mounted on an articulated head having two perpendicular axes of rotation, the X-axis of the ultrasound probe's coordinate system can be aligned with one of the axes of the head (e.g. the E axis - illustrated in Figure 3) and the Z-axis of the ultrasound probe's coordinate system can be aligned with the other of the axes (e.g. the D axis - illustrated in Figure 3). The Y axis completes a right-handed rectangular system, and for an axial probe, the mechanical axis is defined as the Z-axis (e.g. $[0\ 0\ 1]^T$) of the probe coordinate system. For a crank-angled version of the probe, the mechanical axis is a specified constant Euler rotation from this Z-axis column vector. The ultrasound axis is defined as the direction in which the ultrasound wave/pulse travels in the probe coordinate system. It is a fixed vector within the probe's coordinate system, and so like the mechanical axis, it rotates with the ultrasound probe as the ultrasound probe rotates about an axis of the articulated head.

As schematically illustrated by Figure 1, it could be assumed that the probe's ultrasound axis (e.g. L-wave axis) is aligned with the mechanical axis 3 of the probe 2, and therefore if the ultrasound probe engages the object with the mechanical axis normal to the front surface of object, then the ultrasound/L-wave axis will be projected into the part normal to the front surface of the object. Accordingly, if the probe's ultrasound axis is defined as a unit column vector $v_{ua}$, fixed in probe coordinates, in an ideal situation where the probe's ultrasound axis is aligned with the probe's mechanical axis, $v_{ua}$ will be $[0\ 0\ 1]^T$.

However, as explained in WO2020/174214, it is very difficult to manufacture an ultrasound probe with its ultrasound (e.g. L-wave) axis being perfectly aligned with the mechanical axis of the probe. Rather, it is more than likely that the ultrasound\L-wave axis will be slightly misaligned with the mechanical axis of the probe (e.g. by up to 2 to 3 degrees). Causes of misalignment include mechanical misalignment between the shaft and/or body and the transducer, and/or acoustic misalignment (e.g. where the ultrasound beam might not be perfectly symmetrical). Figure 6a, schematically illustrates such a misalignment between the assumed ultrasound\L-wave axis (which is assumed to the same as the mechanical axis 103 shown in dotted-line) and calibrated ultrasound\L-wave axis 105 (shown in solid-line). The extent of the misalignment in Figure 6a is greatly exaggerated for the purposes of illustration.

Even when a small misalignment exists between the assumed and calibrated ultrasound\L-wave axes, the performance of the ultrasound probe apparatus is compromised. In particular, the accuracy of measurements obtained from the ultrasound probe apparatus can be adversely affected by misalignment between the assumed and calibrated L-wave axes. Such misalignment complicates, and diminishes the amplitude of, the interface echo(es).

For example, the distance travelled by the most intense highest amplitude L-wave will be greater than if the mechanical and ultrasonic axes were perfectly aligned and it would be a lower amplitude part of the projected L-wavefront that takes the shortest path between the front 9 and back-walls 11. This will result in lower amplitude and potentially dispersed interface echoes from which the time-delay measurement (and subsequent object, e.g. thickness measurement) is derived using signal processing algorithms that estimate the time-of-arrival or time-difference of arrival of these interface echoes and this can significantly degrade measurement accuracy in such a high precision thickness measurement system (e.g. within 10 microns).

This problem is compounded due to refraction. That is, if the ultrasound pulse (L-wave) does not enter the object normal to the surface, then it will be refracted from the normal in accordance with Snell's Law, the degree of refraction being dependent on the angle of incidence and the speed of sound within the deformable coupling element and the inspection object. In such a case, the ultrasound axis of the ultrasound pulse within the part (or in other words, the ultrasound axis of the "refracted ultrasound pulse") will be different/non-parallel to the ultrasound axis of the ultrasound probe.

Problems associated with misalignment between the mechanical/assumed axis and the probe's actual ultrasound (e.g. L-wave) axis can be significantly reduced by calibrating the ultrasound probe so as to find the ultrasound (L-wave) axis. An example method of calibrating the ultrasound probe 100 is described in WO2020/174214. Knowledge of the calibrated axis of the L-wave of the ultrasound probe can be advantageous for a number of reasons. The calibrated probe will more consistently return optimal interface echoes and improve signal to noise ratio which inherently improves thickness measurement accuracy. In other words, knowledge of the calibrated axis of the L-wave of the ultrasound probe enables the ultrasound probe to be oriented so as to obtain the cleanest signal. For instance, for a given point on an object to be inspected there can be a desired propagation vector for the L-waves to propagate along within the object, and therefrom a target inspection axis/vector may be determined. The target vector can be determined based on the assumed/known geometry of the part, including the part's material properties and taking into consideration Snell's law so that any expected refraction of the ultrasound pulse (L-wave) as it enters the part can be compensated for. Once the target vector has been determined, it is possible, based on knowledge of the relationship between the ultrasound probe's L-wave and mechanical axes from the above-mentioned calibration procedure, to calculate the D and E angles for the articulated head which will ensure that the ultrasound pulse (L-waves) propagates along the desired propagation vector within the object. For example, it is often preferred that the probe is arranged such that the probe's ultrasound axis (at least the ultrasound axis of the ultrasound pulse as it propagates within the part toward the back-wall feature 11) is substantially parallel to the nominal surface normal of the back-wall feature 11, as illustrated in Figure 6b.

For example, during thickness measurements it can be preferred for the ultrasound probe 100 to be arranged such that its ultrasound axis (e.g. L-wave axis) is orientated parallel to the nominal surface-normal of the back-wall feature 11, to ensure a strong interface echo is received. On non-parallel parts (i.e. where the front-wall feature 9 and back-wall feature 11 are not parallel), this will mean that the probe needs to be arranged such that its ultrasound axis is not parallel to the nominal surface-normal of the front-wall feature. In line with the above description, the required incidence vector for the ultrasound axis is calculated through the application of Snell's law so as to take into account the effects of refraction. In this orientation the line along which the thickness is measured is defined by the measurement point on the front surface and the direction along the surface-normal of the back-wall feature.

The process for measuring thickness on a non-parallel part is similar to the case for measurements on a parallel part, in that an ultrasound pulse is emitted, and the echoes thereof are recorded and analysed to determine the thickness of the parts. However, it was found that small errors were present in the determined thickness measurements, even when the ultrasound probe is oriented to compensate for refraction such that the ultrasound axis (e.g. L-wave axis) within the part (e.g. the ultrasound axis of the "refracted ultrasound pulse") is parallel to the nominal surface-normal of the back-wall feature 11. Although such errors may seem small, they can be significant for high-end applications, such as turbine blade inspection.

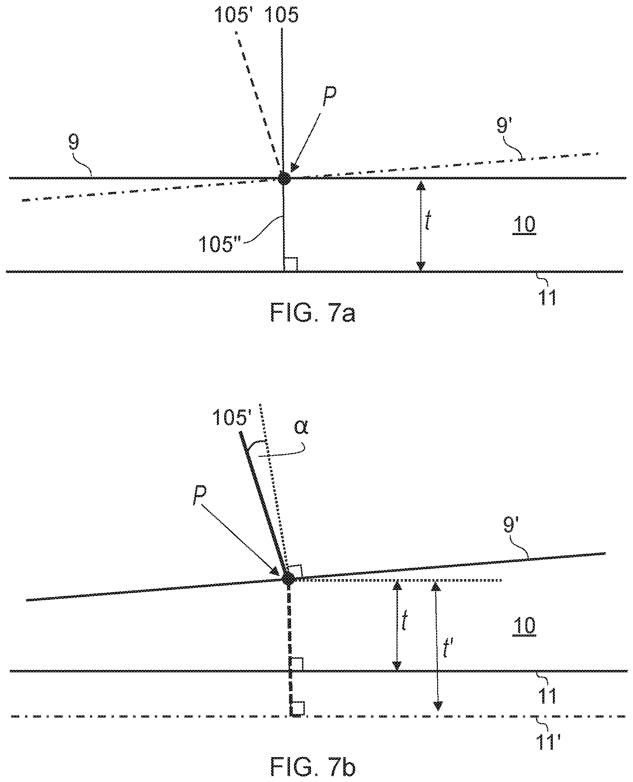

With reference to Figure 7a, there is schematically shown a cross-section through an object 10 having parallel front-wall 9 and back-wall 11 features. The ultrasound probe (the body of which is not shown in Figure 7a for the sake of simplicity) is arranged such that its ultrasound axis (e.g. its L-wave axis) 105 extends parallel to the nominal surface-normal of the back-wall feature 11. An ultrasound measurement is taken (by emitting an ultrasound pulse, and analysing the echoes received from the part) to determine the thickness t of the object at the measurement point P. However, if the object 10 has non-parallel front-wall 9' and back-wall 11 features (e.g. the front-wall was sloping as illustrated by the dot-and-dash line 9' in Figure 7a), then it has been found that without the present invention, a measurement of the thickness of the object at point P (at which point the object has the same thickness t as that of the part having parallel features) provides a slightly different thickness measurement, even if the ultrasound probe's ultrasound axis (illustrated by 105' in Figure 7a) is angled appropriately to compensate for refraction such that the axis along which the ultrasound pulse travels within the part (which in this case can be referred to as the "refracted ultrasound pulse" - illustrated by 105" in Figure 7a) extends parallel to the nominal surface-normal of the back-wall feature 11. Accordingly, at point P on the parallel and non-parallel objects, the measured thickness t for the parallel and non-parallel parts should provide the same measurement, but it was found this was not the case using the standard methods for analysing the signals received by the ultrasound probe.

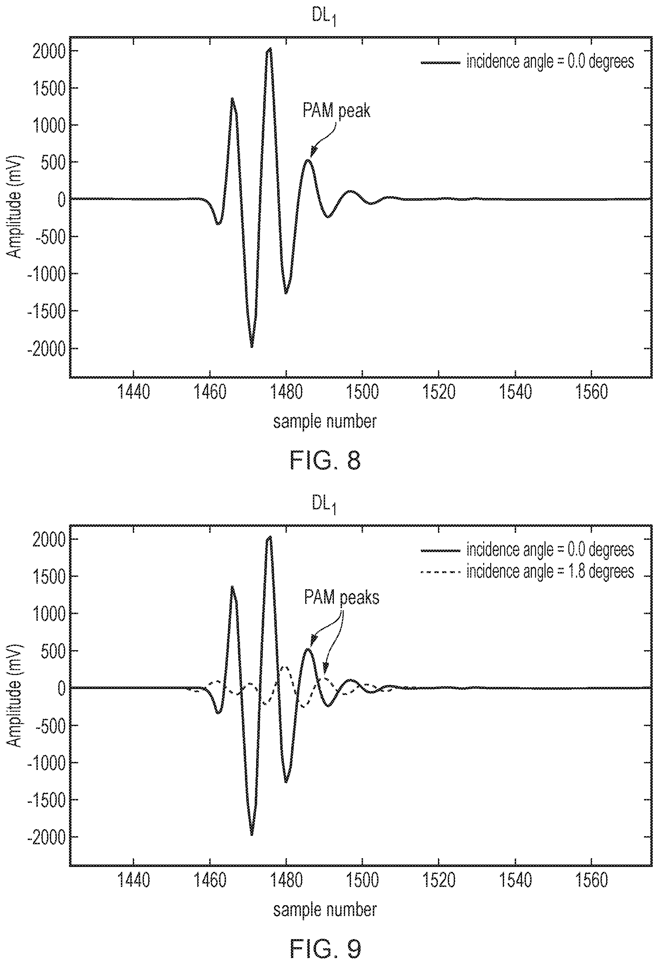

The inventors have identified that the angle of inclination of the probe's ultrasound axis 105/105' as it enters the part at the front-wall surface has an effect on the ultrasound pulse echoes received by the ultrasound probe's transceiver 6, which thereby adversely affects the measurement of the time delay of echoes of the ultrasound pulse, and subsequently properties of the object which are derived therefrom (such as, for example, the thickness of, porosity or density of, or speed of sound within the object at the point of measurement). In particular, it has been found that the angle of inclination can have a significant effect on the front-wall echo. For example, Figure 8 shows the time-domain waveform for the front-wall echo (DL1) received by the ultrasound probe's receiver 6 when the probe's ultrasound axis 105 is arranged to take a measurement on a calibration artefact having parallel front-wall and back-wall features to the surface-normal of the front-wall feature, and wherein the probe's ultrasound axis 105 is arranged parallel to the surface normals of the front-wall and back-wall features. Figure 9 also shows the same signal of Figure 8, but also shown is the time-domain waveform for the front-wall echo (DL1) as received by the ultrasound probe's receiver 6 when the probe's ultrasound axis 105 is arranged to measure a calibration artefact having non-parallel front-wall and back-wall features (in particular having a wedge angle of 1.877°), and wherein the ultrasound probe is arranged at an angle to the surface normal of the front-wall feature (such that the axis along which the refracted ultrasound pulse travels within the part - illustrated by 105" in Figure 7a - extends parallel to the nominal surface-normal of the back-wall feature of the calibration artefact). As can be seen, the amplitude of the front-wall echo (DL1) is significantly suppressed and also the position of its peaks have shifted.

To illustrate the effect of the distortion of the front-wall echo on the time delay measurement, an example now will be given where the time delay is derived via a Mode-2 method, i.e. where the time delay measurement is made between an echo/reflection from the front-wall feature and the first interface echo/reflection from an internal or back-wall feature. For instance, Mode-2 can be performed by identifying in the front-wall echo (DL1) and the first interface echo (BW1) the peak after the absolute maximum peak (the "PAM" peak) and determining the time delay (deltaT) between them. If measuring the thickness of the part, the time delay measurement is then converted to a thickness measurement from knowledge of the speed of sound in the part (e.g. via a prior speed-of-sound calibration process).

However, as illustrated by Figures 8 and 9, when measurements are taken with the probe at an oblique incidence with respect to the front-wall surface normal the front-wall echo (DL1) shape changes/distorts. It is thought that the change/distortion is due to an increase in the variation of path length from each point on the transducer to the front surface and back to the transducer which results in the acoustic signal being intercepted by the transducer over a longer period of time with a reduced amplitude. The DL1 distortion leads to a reduction in the measured time delay (deltaT) which converts to an error in, for example, thickness. The reduction in time delay (deltaT) is related to the angle of incidence of the ultrasound axis relative to the surface-normal of the front-wall feature.

Experiments indicate that when measurements are taken with the probe at an oblique incidence with respect to the front-wall surface normal there can be an error in the time delay measurement which appears to be dependent on the part thickness. For example, with reference to Figure 7b, even with the same angle of inclination $\alpha$ with respect to the front-wall feature 9, the extent of the error in time delay measurement will be different if the part has a first thickness t (i.e. with a back-wall feature 11) or a second thickness t' (i.e. with a back-wall feature 11'). Although not fully understood, this source of error has been found in experiments to be repeatable when based on the thickness of the part at the point of measurement, and might be caused by diffraction of the refracted ultrasonic pulse as it propagates. Accordingly, as described in more detail below, optionally, if desired, the nominal thickness of the part can be taken into consideration as part of the compensation.

In accordance with the present invention, the strategy for dealing with these errors is to find a 'correction' for a given angle of incidence (e.g. a deltaT correction). Additionally, if desired, a 'correction' for part thickness can be found as well as or instead of the 'correction' for a given angle of incidence. If a deltaT correction is determined, the correction can be added to the measured deltaT on non-parallel parts and can compensate for distortions in the echoes to obtain an equivalent parallel part deltaT from a non-parallel measurement. The corrected deltaT can then be used to determine a property of the object, such as its thickness, porosity or density, using the calibrated speed of sound from a standard calibration feature having parallel features, if desired.

In accordance with one example embodiment, a 'correction' or 'compensation' model which can be used during inspection of a part to adjust (in other words, correct/compensate) the time delay measurements obtained by an ultrasound probe, was generated using a wedge artefact, an example of which is illustrated in Figure 10. As shown, an example wedge artefact 300 comprises a block of material having formed therein a plurality of wedge-shape steps 302, 304, 306, 308 (the rear-most "step" 310 is merely a parallel clamping feature so that the wedge artefact can be secured during inspection). In one particular example, a plurality of such wedge artefacts were used, some being made from steel and others from aluminium, and their wedge-shaped steps had wedge angles between 3 and 10 degrees and covered a range of thicknesses from 2mm to 20mm. The wedge-shaped steps were inspected using an ultrasound probe to generate a dataset of measured deltaT values for each of the steps. In particular, measured deltaT values were obtained with the ultrasound probe at a number of different orientations (i.e. with the incidence angle of the ultrasound probe's ultrasound axis arranged at different oblique angles to the surface-normal of the front-wall feature of the wedge-shaped step). If desired, the dataset can also comprise measured deltaT values obtained in different circumstances, such as with different ultrasound probes, and/or different orientations of the calibration artefact(s).

The wedge-shape steps were also inspected via an alternative measurement process (e.g. via touch-trigger probe on a CMM) to determine the precise thickness at any point on the front surface of each wedge-shaped step. This set of thickness measurements was used to determine the 'true' deltaT at any measurement position.

The deltaT adjustment/correction/compensation term can then be defined as the difference between the *unadjusted* deltaT obtained by an ultrasound probe and the true deltaT.

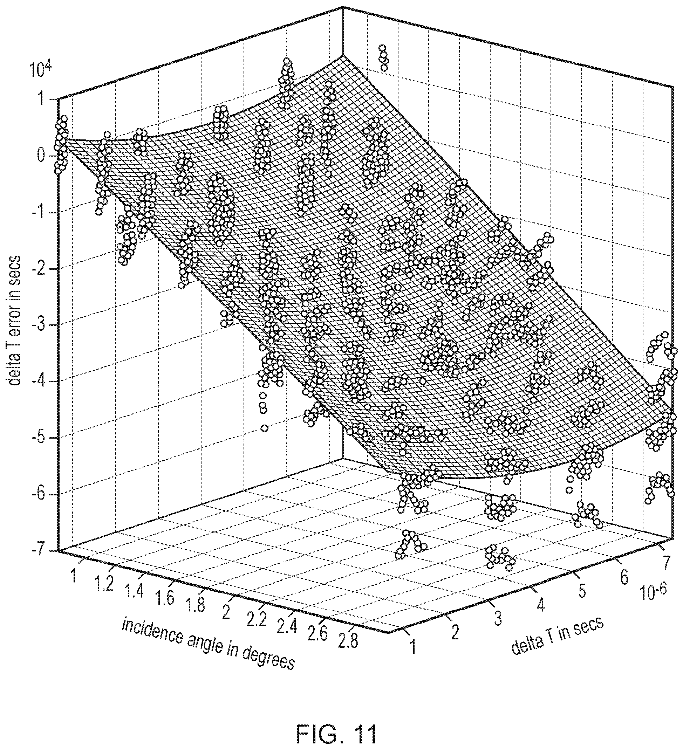

In this example, a 2D polynomial fit of order 2 was applied to the data set to define a deltaT correction/compensation surface as a function of angle of incidence and measured deltaT, as illustrated in Figure 11. As mentioned above, the time delay could be used to determine a property of the object, such as its thickness. Accordingly, this function can then be used to provide a compensated measure of the property (e.g. thickness) of a part of an object based on the angle of inclination of the ultrasound probe's ultrasound axis with respect to the nominal surface-normal of the front-wall feature, and on the measured deltaT. For example, the thickness T of a part could be determined via the following equation:

$$T = CLPart.deltaT/2 + CLPart.\alpha(InclinationAngle, deltaT)/2 + C \quad (1)$$

Where:

> deltaT = the unadjusted deltaT measured by the ultrasound probe;
> $\alpha$ = the "function" determined from the 2D polynomial fit;
> C = a thickness offset correction constant (to compensate for consistent/systematic thickness measurement error. C can be determined when finding CLPart);
> CLPart = speed of sound in calibration block/part/material.

Alternatively, if the nominal thickness of the part at the point of inspection is known, then the function $\alpha$ could take the nominal thickness as an input in place of the *unadjusted* deltaT value.

As will be understood, the above equation compensates for both the angle of inclination and the nominal *thickness*/*unadjusted* deltaT. However, this need not necessarily be the case and the function/equation could be configured to only compensate for one of them (in which case the calibration method/wedge artefacts could be adjusted accordingly). For instance, in another embodiment, the thickness T of a part could be determined via the following equation:

$$T = CLPart.deltaT/2 + CLPart.\alpha(InclinationAngle)/2 + C \quad (2)$$

In the embodiment described above for measuring a non-parallel part, the interface echo from an internal or back-wall feature is not distorted due to the ultrasound axis of the ultrasound pulse within the part (which in this case is the ultrasound axis of the "refracted ultrasound pulse") being aligned to the surface normal of the internal/back-wall feature. Accordingly, for the non-parallel part embodiment, there is a difference in distortion of the front-wall and interface/back-wall echoes, and the difference in distortion will be different based on the angle of the front and interface/back walls. Accordingly, there is a varying error based on the angle on the front and interface/back walls. Note that if measuring a parallel part wherein the ultrasound inspection device's ultrasound axis is arranged at an angle relative to the nominal surface normal of the front-wall feature (i.e. such that they are not parallel to each other), the extent of any distortion of the front and interface/back-wall echoes will be the same because i) the angle of incidence between the ultrasound axis and the front wall and ii) the angle of incidence between the ultrasound axis within the part (which in this case will be the ultrasound axis of the "refracted ultrasound pulse") and the interface/back walls, will be the same. Therefore, no error gets fed through/introduced by such common distortion of the front and back wall echoes. However, compensation is needed due to changes in path length of the DL1 and BW1 (or BW2 if measuring using a Mode-3 technique) echoes which is dependent on angle of the ultrasound inspection device's ultrasound axis relative to the nominal surface normal of the front-wall feature. The above-described techniques for determining and using a deltaT correction/compensation can be used for such a situation.

The above describes an experimental way to determine the "correction" or "compensation" model. As will be understood, alternative techniques for determining such a model include through simulation using numerical methods, such as via the Rayleigh-Sommerfeld diffraction theory.

The above describes a specific embodiment for system that implement a Mode-2 measurement. However, the same techniques can be used for systems that implement a Mode-3 measurement, e.g. one that uses two successive back-wall echoes. In such a Mode-3 measurement, the second (BW2) echo will be distorted in the same way as DL1 since it will be incident on the transducer at the same angle leading to same source of error described in the patent.

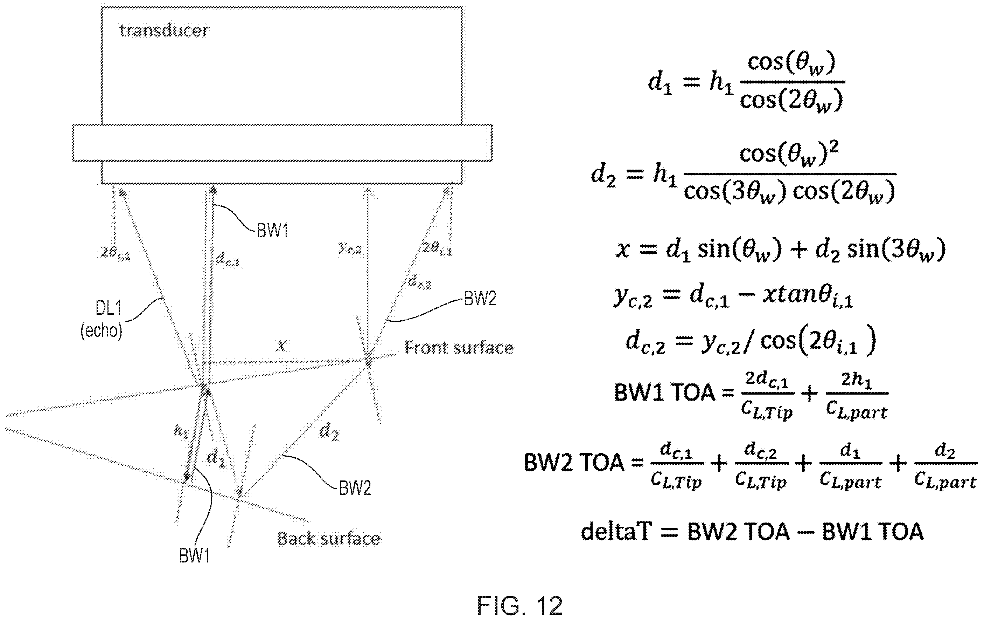

This could be corrected by using a deltaT compensation term as described above. The process for finding the deltaT compensation would be exactly the same as described above. The only difference would be that BW1 echo would be processed to find the time of arrival of echo 1 (TOA1) and BW2 would be processed to find the TOA of echo 2 (TOA2); the time delay would then be calculated by subtracting TOA1 from TOA2. As will be understood, there is an assumption that the part is planar over a larger section of the interface/back-wall surface due to the horizontal/lateral distance travelled by the ultrasound beam/pulse between interface/back-wall reflections. As will also be understood, due to the path length of the BW2 echo being different to the BW1 echo (as illustrated in Figure 12), the equation for determining the thickness T of a part can be modified accordingly, e.g. as follows:

$$T = \frac{c_{L,part}}{(K(\text{InclinationAngle})-2)}\big(\text{deltaT} + \alpha(\text{InclinationAngle})\big) + C \qquad (3)$$

where K relates to the path taken by the ultrasound pulse to the thickness at the measurement position and $\alpha$ is the same as equation (2).

As described above, it is not essential that the function $\alpha$ takes the unadjusted deltaT (or nominal thickness value) as an input parameter. **In** other words, it is not essential to take into consideration the thickness of the part as part of the compensation for the angle of incidence (i.e. the angle of the ultrasound inspection device's ultrasound axis with respect to the nominal surface normal of the front-wall feature). Accordingly, in such cases it is not necessary for the compensation model/function to be generated from measurements of sections having different thicknesses, but instead could be generated from measurements obtained at one thickness.

**Claims**

1. A method of determining the time delay between echoes of an ultrasound pulse emitted by an ultrasound inspection device (100) into an object (10), wherein the ultrasound inspection device and object are provided on a positioning apparatus having at least one axis (D, E) about which the relative orientation of the ultrasound inspection device's ultrasound axis and object can be changed, and wherein one or more sensors are provided on the positioning apparatus for monitoring the relative arrangement of the ultrasound inspection device and the object, the method comprising:

    i) with the ultrasound probe in engagement with a front-wall (9) feature of the object such that the ultrasound inspection device's ultrasound axis is arranged at a known angle relative to the nominal surface normal of the front-wall feature, taking an ultrasound measurement which comprises the ultrasound inspection device emitting an ultrasound pulse and recording echoes thereof, wherein the angle is known from the one or more sensors that are provided on the positioning apparatus for monitoring the relative arrangement of the ultrasound inspection device and the object; and
    ii) determining the time delay between echoes of the pulse via a time delay determination process which adjusts the time delay calculation based on the known angle of the ultrasound inspection device's ultrasound axis with respect to the nominal surface normal of the front-wall feature.

2. A method as claimed in claim 1, comprising determining the time delay between an echo from the front-wall feature of the object and an interface echo from the internal or back-wall (11) feature of the object.

3. A method as claimed in claim 1 or 2, in which the front-wall feature and the internal or back-wall feature are non-parallel.

4. A method as claimed in any preceding claim, in which the time delay determination process additionally takes as an input, a variable relating to the nominal thickness of the part at the point of measurement between the front-wall feature and the internal or back-wall feature.

5. A method as claimed in any preceding claim, in which the time delay determination process additionally takes as an input a variable relating to the nominal speed of sound in the part at the point of measurement.

6. A method as claimed in any preceding claim, in which the time delay determination process additionally takes as an input an unadjusted measure of the time delay between echoes of the pulse.

7. A method as claimed in any preceding claim, in which the relative angular orientation of the ultrasound axis and said part at the point the ultrasound measurement is taken, is chosen such that the ultrasound axis of the ultrasound pulse as it propagates through the part is substantially parallel to the nominal surface normal of the internal or back-wall feature at the point of measurement.

8. A method as claimed in any preceding claim, in which the time delay determination process comprises a compensation model for determining the extent of adjustment based on the angle of the ultrasound inspection device's ultrasound axis with respect to the nominal surface normal of the front-wall feature.

9. A method as claimed in claim 8 in which the compensation model comprises at least one matrix, at least one function, and/or at least one look-up table.

10. A method as claimed in any preceding claim, comprising determining at least one of the thickness of, material structure of, or speed of sound within the object between the front-wall feature and the internal or back-wall feature, at the point of measurement.

11. A method as claimed in any preceding claim, in which the ultrasound inspection device comprises a deformable coupling element (108) for engaging the surface of an object to be inspected.

12. A method as claimed in any preceding claim, in which the positioning apparatus (200) comprises a coordinate positioning apparatus.

13. A method as claimed in any preceding claim, in which the positioning apparatus facilitates translational motion of the ultrasound probe in at least two linear degrees of freedom, and facilitates rotational motion of the ultrasound probe about at least one axis of rotation.

14. A method as claimed in any preceding claim, in which the one or more sensors comprise one or more position encoder devices, which are configured to monitor the relative position and/or angle of the relatively moveable parts of the positioning apparatus.

15. An apparatus comprising a positioning apparatus (200) and an ultrasound inspection device (100) for mounting thereon, configured such that the relative translational position, and the relative angular orientation about at least one axis, of the ultrasound probe and an object (10) to be inspected can be manipulated, wherein one or more sensors are provided on the positioning apparatus for monitoring the relative translational position and relative angular orientation of the ultrasound inspection device and the object, and the apparatus further comprising a processing device configured to determine a time delay between echoes of an ultrasound pulse emitted by an ultrasound inspection device into the object, via the method according to any of claims 1 to 14.

**Patentansprüche**

1. Verfahren zum Bestimmen der Zeitverzögerung zwischen Echos eines Ultraschallimpulses, der von einer Ultraschallprüfvorrichtung (100) in ein Objekt (10) ausgesendet wird,

   wobei die Ultraschallprüfvorrichtung und das Objekt auf einer Positionierungsvorrichtung bereitgestellt werden, die mindestens eine Achse (D, E) aufweist, um die die relative Ausrichtung der Ultraschallachse der Ultraschallprüfvorrichtung und des Objekts geändert werden kann, und

wobei ein oder mehrere Sensoren auf der Positionierungsvorrichtung bereitgestellt werden, um die relative Anordnung der Ultraschallprüfvorrichtung und des Objekts zu überwachen, wobei das Verfahren Folgendes umfasst:

i) mit der Ultraschallsonde in Eingriff mit einem Vorderwandmerkmal (9) des Objekts, so dass die Ultraschallachse der Ultraschallprüfvorrichtung in einem bekannten Winkel relativ zu der nominalen Oberflächennormalen des Vorderwandmerkmals angeordnet ist, Durchführen einer Ultraschallmessung, die umfasst, dass die Ultraschallprüfvorrichtung einen Ultraschallimpuls aussendet und Echos davon aufzeichnet, wobei der Winkel von dem einen oder den mehreren Sensoren bekannt ist, die auf der Positionierungsvorrichtung bereitgestellt werden, um die relative Anordnung der Ultraschallprüfvorrichtung und des Objekts zu überwachen; und

ii) Bestimmen der Zeitverzögerung zwischen Echos des Impulses über einen Zeitverzögerungsbestimmungsprozess, der die Zeitverzögerungsberechnung basierend auf dem bekannten Winkel der Ultraschallachse der Ultraschallprüfvorrichtung in Bezug auf die nominale Oberflächennormale des Vorderwandmerkmals anpasst.

2. Verfahren nach Anspruch 1, umfassend das Bestimmen der Zeitverzögerung zwischen einem Echo von dem Vorderwandmerkmal des Objekts und einem Schnittstellenecho von dem Innen- oder Rückwandmerkmal (11) des Objekts.

3. Verfahren nach Anspruch 1 oder 2, bei dem das Vorderwandmerkmal und das Innen- oder Rückwandmerkmal nicht parallel sind.

4. Verfahren nach einem der vorhergehenden Ansprüche, bei dem der Zeitverzögerungsbestimmungsprozess zusätzlich als eine Eingabe eine Variable nimmt, die sich auf die nominale Dicke des Teils an dem Messpunkt zwischen dem Vorderwandmerkmal und dem Innen- oder Rückwandmerkmal bezieht.

5. Verfahren nach einem der vorhergehenden Ansprüche, bei dem der Zeitverzögerungsbestimmungsprozess zusätzlich als eine Eingabe eine Variable nimmt, die sich auf die nominale Schallgeschwindigkeit in dem Teil an dem Messpunkt bezieht.

6. Verfahren nach einem der vorhergehenden Ansprüche, bei dem der Zeitverzögerungsbestimmungsprozess zusätzlich als eine Eingabe ein nicht angepasstes Maß der Zeitverzögerung zwischen Echos des Impulses nimmt.

7. Verfahren nach einem der vorhergehenden Ansprüche, bei dem die relative Winkelausrichtung der Ultraschallachse und des Teils an dem Punkt, an dem die Ultraschallmessung durchgeführt wird, so gewählt wird, dass die Ultraschallachse des Ultraschallimpulses, während er sich durch das Teil ausbreitet, im Wesentlichen parallel zu der nominalen Oberflächennormale des Innen- oder Rückwandmerkmals an dem Messpunkt ist.

8. Verfahren nach einem der vorhergehenden Ansprüche, bei dem der Zeitverzögerungsbestimmungsprozess ein Kompensationsmodell zum Bestimmen des Ausmaßes der Anpassung basierend auf dem Winkel der Ultraschallachse der Ultraschallprüfvorrichtung in Bezug auf die nominale Oberflächennormale des Vorderwandmerkmals umfasst.

9. Verfahren nach Anspruch 8, bei dem das Kompensationsmodell mindestens eine Matrix, mindestens eine Funktion und/oder mindestens eine Nachschlagetabelle umfasst.

10. Verfahren nach einem der vorhergehenden Ansprüche, umfassend das Bestimmen von mindestens einem von der Dicke, der Materialstruktur oder der Schallgeschwindigkeit innerhalb des Objekts zwischen dem Vorderwandmerkmal und dem Innen- oder Rückwandmerkmal an dem Messpunkt.

11. Verfahren nach einem der vorhergehenden Ansprüche, bei dem die Ultraschallprüfvorrichtung ein verformbares Kopplungselement (108) zum Eingreifen in die Oberfläche eines zu prüfenden Objekts umfasst.

12. Verfahren nach einem der vorhergehenden Ansprüche, bei dem die Positionierungsvorrichtung (200) eine Koordinatenpositionierungsvorrichtung umfasst.

**13.** Verfahren nach einem der vorhergehenden Ansprüche, bei dem die Positionierungsvorrichtung eine Translationsbewegung der Ultraschallsonde in mindestens zwei linearen Freiheitsgraden erleichtert und eine Drehbewegung der Ultraschallsonde um mindestens eine Drehachse erleichtert.

**14.** Verfahren nach einem der vorhergehenden Ansprüche, bei dem der eine oder die mehreren Sensoren eine oder mehrere Positionscodierervorrichtungen umfassen, die konfiguriert sind, um die relative Position und/oder den Winkel der relativ beweglichen Teile der Positionierungsvorrichtung zu überwachen.

**15.** Vorrichtung, umfassend eine Positionierungsvorrichtung (200) und eine Ultraschallprüfvorrichtung (100) zum Montieren darauf, die so konfiguriert ist, dass die relative Translationsposition und die relative Winkelausrichtung um mindestens eine Achse der Ultraschallsonde und eines zu prüfenden Objekts (10) manipuliert werden können, wobei ein oder mehrere Sensoren auf der Positionierungsvorrichtung bereitgestellt werden, um die relative Translationsposition und die relative Winkelausrichtung der Ultraschallprüfvorrichtung und des Objekts zu überwachen, und die Vorrichtung ferner eine Verarbeitungsvorrichtung umfasst, die konfiguriert ist, um eine Zeitverzögerung zwischen Echos eines Ultraschallimpulses, der von einer Ultraschallprüfvorrichtung in das Objekt ausgesendet wird, über das Verfahren nach einem der Ansprüche 1 bis 14 zu bestimmen.

## Revendications

**1.** Un procédé de détermination du délai entre les échos d'une impulsion ultrasonore émise par un dispositif d'inspection par ultrasons (100) dans un objet (10),
dans lequel le dispositif d'inspection par ultrasons et l'objet sont prévus sur un appareil de positionnement ayant au moins un axe (D, E) autour duquel l'orientation relative de l'objet et de l'axe à ultrasons du dispositif d'inspection par ultrasons peut être modifiée, et dans lequel un ou plusieurs capteurs sont prévus sur l'appareil de positionnement pour surveiller la disposition relative du dispositif d'inspection par ultrasons et de l'objet, le procédé comprenant :

i) avec le palpeur à ultrasons en prise avec une entité de paroi frontale (9) de l'objet de telle sorte que l'axe à ultrasons du dispositif d'inspection par ultrasons est disposé à un angle connu par rapport à la perpendiculaire de surface nominale de l'entité de paroi frontale, en prenant une mesure à ultrasons qui comprend le dispositif d'inspection par ultrasons émettant une impulsion ultrasonore et en fonction de ses échos, dans lequel l'angle est connu à partir du ou des capteurs qui sont prévus sur l'appareil de positionnement pour surveiller la disposition relative du dispositif d'inspection par ultrasons et de l'objet ; et
ii) déterminer le délai entre les échos de l'impulsion via un processus de détermination de délai qui ajuste le calcul de délai sur la base de l'angle connu de l'axe à ultrasons du dispositif d'inspection par ultrasons par rapport à la perpendiculaire de surface nominale de l'entité de paroi frontale.

**2.** Un procédé selon la revendication 1, comprenant la détermination du délai entre un écho provenant de l'entité de paroi frontale de l'objet et un écho d'interface provenant de l'entité de paroi interne ou arrière (11) de l'objet.

**3.** Un procédé selon la revendication 1 ou 2, dans lequel l'entité de paroi frontale et l'entité de paroi interne ou de paroi arrière ne sont pas parallèles.

**4.** Un procédé selon l'une quelconque des revendications précédentes, dans lequel le processus de détermination du délai prend en outre comme entrée, une variable relative à l'épaisseur nominale de la pièce au point de mesure entre l'entité de paroi frontale et l'entité de paroi interne ou arrière.

**5.** Un procédé selon l'une quelconque des revendications précédentes, dans lequel le processus de détermination du délai prend en outre comme entrée une variable relative à la vitesse nominale du son dans la pièce au point de mesure.

**6.** Un procédé selon l'une quelconque des revendications précédentes, dans lequel le processus de détermination du délai prend en outre comme entrée une mesure non ajustée du délai entre les échos de l'impulsion.

**7.** Un procédé selon l'une quelconque des revendications précédentes, dans lequel l'orientation angulaire relative de l'axe à ultrasons et de ladite partie au point où la mesure ultrasonore est prise, est choisie de telle sorte que l'axe à ultrasons de l'impulsion ultrasonore lorsqu'elle se propage à travers la pièce est sensiblement parallèle à la perpendiculaire de surface nominale de l'entité interne ou de la paroi arrière au point de mesure.

**8.** Un procédé selon l'une quelconque des revendications précédentes, dans lequel le processus de détermination du délai comprend un modèle de compensation pour déterminer l'étendue du réglage sur la base de l'angle de l'axe à ultrasons du dispositif d'inspection par ultrasons par rapport à la perpendiculaire de surface nominale de l'entité de paroi frontale.

**9.** Un procédé selon la revendication 8, dans lequel le modèle de compensation comprend au moins une matrice, au moins une fonction et/ou au moins une table de consultation.

**10.** Un procédé selon l'une quelconque des revendications précédentes, comprenant la détermination d'au moins l'une de l'épaisseur, de la structure matérielle ou de la vitesse du son à l'intérieur de l'objet entre l'entité de paroi frontale et l'entité de paroi interne ou arrière, au point de mesure.

**11.** Un procédé selon l'une quelconque des revendications précédentes, dans lequel le dispositif d'inspection par ultrasons comprend un élément de couplage déformable (108) pour engager la surface d'un objet à inspecter.

**12.** Un procédé tel que revendiqué dans l'une quelconque des revendications précédentes, dans lequel l'appareil de positionnement (200) comprend un appareil de positionnement par coordonnées.

**13.** Un procédé selon l'une quelconque des revendications précédentes, dans lequel l'appareil de positionnement facilite le mouvement de translation du palpeur à ultrasons dans au moins deux degrés linéaires de liberté, et facilite le mouvement de rotation du palpeur à ultrasons autour d'au moins un axe de rotation.

**14.** Un procédé selon l'une quelconque des revendications précédentes, dans lequel le ou les capteurs comprennent un ou plusieurs dispositifs de codage de position, qui sont configurés pour surveiller la position relative et/ou l'angle des pièces relativement mobiles de l'appareil de positionnement.

**15.** Un appareil comprenant un appareil de positionnement (200) et un dispositif d'inspection par ultrasons (100) à monter sur celui-ci, configuré de telle sorte que la position de translation relative, et l'orientation angulaire relative autour d'au moins un axe, du palpeur à ultrasons et d'un objet (10) à inspecter peuvent être manipulées, dans lequel un ou plusieurs capteurs sont prévus sur l'appareil de positionnement pour surveiller la position de translation relative et l'orientation angulaire relative du dispositif d'inspection par ultrasons et de l'objet, et l'appareil comprenant en outre un dispositif de traitement configuré pour déterminer un délai entre les échos d'une impulsion ultrasonore émise par un dispositif d'inspection par ultrasons dans l'objet, via le procédé selon l'une quelconque des revendications 1 à 14.

FIG. 1

FIG. 2

**FIG. 3**

102

100

104

108

FIG. 4

300

310

308

306

304

302

FIG. 10

Data Capture + Comms Interface

FIG. 5

FIG. 6a

FIG. 6b

FIG. 7a

FIG. 7b

DL$_1$

FIG. 8

DL$_1$

FIG. 9

FIG. 11

$$d_1 = h_1 \frac{\cos(\theta_w)}{\cos(2\theta_w)}$$

$$d_2 = h_1 \frac{\cos(\theta_w)^2}{\cos(3\theta_w)\cos(2\theta_w)}$$

$$x = d_1 \sin(\theta_w) + d_2 \sin(3\theta_w)$$

$$y_{c,2} = d_{c,1} - x\tan\theta_{i,1}$$

$$d_{c,2} = y_{c,2}/\cos(2\theta_{i,1})$$

$$\text{BW1 TOA} = \frac{2d_{c,1}}{c_{L,Tip}} + \frac{2h_1}{c_{L,part}}$$

$$\text{BW2 TOA} = \frac{d_{c,1}}{c_{L,Tip}} + \frac{d_{c,2}}{c_{L,Tip}} + \frac{d_1}{c_{L,part}} + \frac{d_2}{c_{L,part}}$$

$$\text{deltaT} = \text{BW2 TOA} - \text{BW1 TOA}$$

FIG. 12

EP 4 409 229 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5189806 A
- WO 2009024783 A
- GB 2440959 A
- US 20090178482 A

- WO 2016051147 A
- WO 2020174214 A
- WO 2016051148 A

**Non-patent literature cited in the description**

- Incident Angle Identification Based on First-Echo Energy Attenuation in Ultrasound Thickness Measurement. **WANG YONGQING et al.** IEEE TRANSACTIONS ON ULTRASONICS, FERROELECTRICS, AND FREQUENCY CONTROL. IEEE, 01 November 2018, vol. 65, 2141-2149